# EUROPÄISCHE PATENTANMELDUNG

(11) **EP 2 174 550 A2**
(43) Veröffentlichungstag der Anmeldung: **14.04.2010**
(21) Anmeldenummer: 10150196.3
(22) Anmeldetag: 03.11.2003
(51) Int. Cl.: A21D 13/08, A23L 1/0532, A23L 1/00

(54) **Tortenguss und Verfahren zur Zubereitung von Tortenguss**

(30) Priorität: 02.12.2002 DE 10256398
(62) Teilanmeldung aus: 03025114.4
(71) Anmelder: Lucullus, Backen & Geniessen GmbH & Co. KG, 64297 Darmstadt (DE)
(72) Erfinder: Pleser, Dr., Ingo, 60487 Frankfurt am Main (DE); Schulz, Eberhard, 64342 Seeheim-Jugenheim (DE)
(74) Vertreter: Richardt, Markus Albert

(57) **Zusammenfassung**

Die Erfindung betrifft einen Tortenguss mit
- einem löslichen Salz der Alginsäure,
- einem schwer oder nicht in Wasser löslichen Calciumionendonator,
- einer Lebensmittelsäure.

## Beschreibung

Die Erfindung betrifft einen Tortenguss, insbesondere Tortengusspulver, eine neue Verwendung von Alginsäure und ein Verfahren zur Zubereitung von Tortenguss.

Mit Tortenguss lässt sich ein schnittfähiger Überzug z.B. für Obstkuchen und Torten herstellen. Üblicher Tortenguss beinhaltet als Geliermittel Carrageen (E 407) und als Verdickungsmittel Stärke, z. B. Tapiokastärke.

Bei Carrageen handelt es sich um ein komplexes Gemisch verschiedener Polysaccharide. Carrageen wird aus Rotalgen (Rhodophyceae) gewonnen.

Üblicherweise wird Tortenguss pulverförmig angeboten. Zur Zubereitung wird der pulverförmige Tortenguss in Wasser oder Fruchtsaft eingerührt und die Flüssigkeit wird dann zum Kochen gebracht. Das Aufkochen ist für die Auslösung der Gelbildung und auch zum Aufschließen der Stärke erforderlich.

Ein Nachteil von vorbekannten Tortenguss ist also, dass zur Zubereitung des Tortengusses die Flüssigkeit zum Kochen gebracht werden muss. Damit verbunden ist der Nachteil, dass vor dem Verzehr das Abkühlen des Tortengusses abgewartet werden muss und dass die Gelbildung relativ langsam verläuft.

Der Erfindung liegt die Aufgabe zugrunde, einen Tortenguss zu schaffen, der ohne Aufkochen zubereitet werden kann.

Die der Erfindung zugrunde liegende Aufgabe wird mit den Merkmalen der unabhängigen Patentansprüche gelöst. Bevorzugte Ausführungsformen der Erfindung sind in den abhängigen Patentansprüchen angegeben.

Erfindungsgemäß wird ein lösliches Salz der Alginsäure zusammen mit einem Calciumionendonator für eine Alginat-Calcium-Gelbildungsreaktion verwendet. Der Calciumionendonator liegt dabei in einer schwer oder nicht in Wasser löslichen Form vor. Zusätzlich wird eine Lebensmittelsäure zugegeben.

Aus dem Stand der Technik bekannte Alginat-Calcium-Gelbildungsreaktoren verlaufen sehr schnell im Sekundenbereich. Dies ist für manche Anwendungsgebiete, wie z.B. die Herstellung von so genannter Götterspeise oder Wackelpeter vorteilhaft. Für die Zubereitung von Tortenguss sind solche aus dem Stand der Technik an sich bekannte Alginat-Calcium-Gelbildungsreaktionen jedoch nicht geeignet, da die Gelbildungsreaktion hinreichend langsam verlaufen muss, um den Tortenguss auf dem Kuchen- oder Tortenbelag zu verteilen.

Aus der DE 695 20 737 T2 ist ein Verfahren zur Nahrungsmittelumstrukturierung mit Kontrolle des Gelierens einer Alginat-Calcium-Gelbildungsreaktion bekannt und zwar für die Nahrungsmittel Gemüse, Frucht oder Fleisch. Insbesondere aus geschmacklichen Gründen ist die dort offenbarte Art der Kontrolle des Gelierens für Tortenguss nicht einsetzbar.

Aus der DE-OS 1 642 561 und der DE 24 20 622 A1 ist ferner an sich die Verwendung von Alginaten für Obsttorten bzw. als Grundmasse für kalt anrührbare Nahrungsmittel-Einbettungsmassen bekannt.

Erfindungsgemäß wird vorzugsweise Calciumphosphat (CaHPO₄) als Calciumionendonator eingesetzt. Calciumphosphat ist in Wasser praktisch unlöslich. Aufgrund der Zugabe einer Lebensmittelsäure kommt es dennoch zu der Alginat-Calcium-Gelbildungsreaktion, da die Lebensmittelsäure Calciumionen aus dem Calciumphosphat langsam freisetzt. Dadurch wird die Gelbildungsreaktion so verlangsamt, dass eine bequeme Handhabung der zubereiteten Tortengussmasse ermöglicht wird.

Nach einer weiteren bevorzugten Ausführungsform der Erfindung wird eine schwache Lebensmittelsäure eingesetzt, wie z.B. Zitronensäure oder Weinsäure. Dies führt insbesondere zu geschmacklich optimalen Ergebnissen.

Nach einer weiteren bevorzugten Ausführungsform der Erfindung wird Natriumalginat oder Kaliumalginat als lösliches Salz der Alginsäure verwendet. Natriumalginat wird in Form verschiedener Handelsprodukte angeboten. Als besonders vorteilhaft hat sich die Verwendung von PROTANAL® der Firma FMC Biopolymer herausgestellt.

Nach einer weiteren bevorzugten Ausführungsform wird eine Puffersubstanz zur Ausbildung eines Puffersystems mit der Lebensmittelsäure zugesetzt. Hierdurch wird ein bestimmter pH-Wert im Bereich von vorzugsweise 3,6 bis 4,3 eingestellt, bei dem die Gelierung optimal gehemmt erfolgt. Aufgrund dieser Stabilisierung des pH-Werts durch das Puffersystem wird sogar auch die Verwendung von Fruchtsaft anstelle von Wasser oder eines Fruchtsaft-Wassergemisches im Verhältnis von z.B. 1 : 1 ermöglicht. Aufgrund des Puffersystems wird vermieden, dass die Fruchtsäure in dem Fruchtsaft zu einer unerwünschten Beschleunigung der Gelbildungsreaktion führt.

Nach einer bevorzugten Ausführungsform der Erfindung wird als Säure-Base-Paar für die Pufferlösung Zitronensäure und Tri-Natriumcitrat eingesetzt. Alternativ wird Weinsäure in Kombination mit Weinsäuresalz verwendet.

Nach einer weiteren bevorzugten Ausführungsform der Erfindung wird ein Verdickungsmittel verwendet, um die Viskosität des zubereiteten Tortengusses zu erhöhen. Die Verringerung der Fließfähigkeit hat den Vorteil, dass sich der Tortenguss- auf dem Belag besser verteilen lässt und nicht herunterfließt. Erfindungsgemäß wird vorzugsweise ein Verdickungsmittel eingesetzt, welches nicht aufgekocht werden muss. Ein solches Verdickungsmittel ist beispielsweise Carboxymethylcellulose. Dieses Verdickungsmittel ist beispielsweise unter dem Handelsnamen Akucell AF318 kommerziell erhältlich. Von besonderem Vorteil ist hierbei, dass auch bei Verwendung eines Verdickungsmittels ein Aufkochen der Tortenguss-Zubereitung nicht erforderlich ist.

Die Zubereitung des erfindungsgemäßen Tortengusses kann also so erfolgen, dass ein Gemisch aus einem löslichen Salz der Alginsäure, einem schwer oder nicht in Wasser löslichen Calciumionendonator und einer Lebensmittelsäure in kaltes oder warmes Wasser eingerührt wird. Beispielsweise kann für die Zubereitung kaltes Leitungswasser oder Wasser mit Zimmertemperatur verwendet werden. Aufgrund der langsamen Freisetzung von Calciumionen aufgrund der schwachen Lebensmittelsäure verläuft die Gelbildung innerhalb einiger Minuten, z.B. 4 bis 8 Minuten. Diese Gelbildungsgeschwindigkeit ermöglicht eine optimale Handhabung des Tortengusses, d.h. das Aufbringen und die Verteilung des Tortengusses auf dem Kuchen- oder Tortenbelag.

Wenn das Tortengusspulver eine Puffersubstanz beinhaltet, kann statt Wasser auch ein Fruchtsaft oder ein Wasser-Fruchtsaft-Gemisch verwendet werden, da aufgrund der Stabilisierung des pH-Werts durch das Puffersystem eine unerwünschte Beschleunigung der Gelbildungsreaktion durch die Fruchtsäure unterbleibt.

Im Weiteren wird eine bevorzugte Ausführungsform der Erfindung näher erläutert:

Ein Beispiel für die Zusammensetzung einer Ausführungsform des erfindungsgemäßen Tortengusspulvers ist im Folgenden tabellarisch angegeben:

| | |
|---|---|
| lösliches Salz der Alginsäure | 7 bis 18% |
| schwache Lebensmittelsäure, insbesondere Zitronensäure | 3 bis 8 % |
| Calciumionendonator, insbesondere Di-Calciumphosphat | 0,3 bis 2 % |
| Puffersubstanz, insbesondere Tri-Natriumcitrat | 1 bis 4 % |
| Verdickungsmittel, insbesondere Carboxymethylcellulose | 1 bis 6 % |
| Zucker | 60 bis 80 % |

Die Anteile sind dabei in Gewichtsprozent angegeben. Zusätzlich kann Lebensmittelfarbstoff zugegeben werden, um z. B. roten Tortenguss herzustellen.

Zur Zubereitung von Tortenguss wird das Tortengusspulver in z. B. einen Viertel Liter kalten oder warmen Wassers gegeben. Hierbei kann es sich beispielsweise um kaltes Leitungswasser oder um Wasser mit Raumtemperatur handeln. Alternativ kann das Tortengusspulver auch in eine Fruchtsaft-Wasser-Mischung gegeben werden.

Das Pulver wird dann z. B. eine Minute lang mit einem Schneebesen oder einer Gabel in die Flüssigkeit eingerührt. Dabei ist eine Erwärmung der Flüssigkeit nicht erforderlich. Nach dem Einrühren wird der zubereitete Tortenguss auf die belegte Torte gegeben und geliert dort innerhalb weniger Minuten, ohne den Tortenboden zu durchweichen.

Zur optimalen Einstellung der Geliergeschwindigkeit hat sich ein pH-Wert im Bereich zwischen 3,6 bis 4,3 als ideal herausgestellt. Dieser pH-Wert wird durch z.B. das Puffersystem aus Zitronensäure und Tri-Natriumcitrat eingestellt, und zwar auch dann, wenn Fruchtsaft verwendet wird.

In diesem pH-Wert-Bereich werden die Calciumionen sehr langsam von der Zitronensäure aus dem Calciumphosphat freigesetzt, sodass es zu einer entsprechenden Verlangsamung der Alginat-Calcium-Gelbildungsreaktion kommt. Besonders vorteilhaft ist dabei, dass durch dieses Puffersystem auch die Fruchtsäuren aus Obstsäften abgepuffert werden, welche die Gelbildungsreaktion dann nicht wesentlich beschleunigen können.

Besonders vorteilhaft ist bei der Verwendung des erfindungsgemäßen Tortengusspulvers, dass die Erwärmung des Wassers oder gar ein Aufkochen zur Auslösung der Gelbildungsreaktion und für das Aufschließen des Verdickungsmittels, wie im Stand der Technik üblich, nicht erforderlich ist, und dass die Gelierung der auf den Kuchen- oder Tortenbelag aufgebrachten Tortengussmasse schnell, innerhalb weniger Minuten erfolgt.

Unter Verwendung der erfindungsgemäßen Tortengussmasse kann also z. B. ein belegter Obstkuchen innerhalb kürzester Zeit hergestellt werden, wenn der fertige Kuchenboden mit Früchten belegt wird, die sodann mit der Tortengussmasse übergossen werden. Insbesondere erübrigt es sich auch, das Erkalten des Tortengusses abzuwarten.

## Patentansprüche

1. Tortenguss mit
- einem löslichen Salz der Alginsäure,
- einem schwer oder nicht in Wasser löslichen Calciumionendonator,
- einer Lebensmittelsäure.

2. Tortenguss nach Anspruch 1, wobei es sich bei der Lebensmittelsäure um eine schwache Lebensmittelsäure handelt.

3. Tortenguss nach Anspruch 1 oder 2, wobei es sich bei der Lebensmittelsäure um Zitronensäure oder um Weinsäure handelt.

4. Tortenguss nach Anspruch 1, 2 oder 3, wobei es sich bei dem löslichen Salz der Alginsäure um Natriumalginat oder um Kaliumalginat handelt.

5. Tortenguss nach einem der vorhergehenden Ansprüche 1 bis 4, wobei es sich bei dem Donator um Calciumphosphat (CaHPO₄) handelt.

6. Tortenguss nach einem der vorhergehenden Ansprüche 1 bis 5, mit einer Puffersubstanz zur Ausbildung eines Puffersystems mit der Lebensmittelsäure.

7. Tortenguss nach Anspruch 6, wobei es sich bei der Puffersubstanz um Tri-Natriumcitrat oder um Weinsäuresalz handelt.

8. Tortenguss nach Anspruch 6 oder 7, wobei die Lebensmittelsäure und die Puffersubstanz so gewählt sind, dass das Puffersystem auf einen pH-Wert von über 3, vorzugsweise über 3,6 stabilisiert ist.

9. Tortenguss nach Anspruch 8, wobei das Puffersystem auf einen pH-Wert von unter 6, vorzugsweise unter 4,3 stabilisiert ist.

10. Tortenguss nach einem der vorhergehenden Ansprüche 1 bis 9 mit einem in kaltem oder warmen Wasser gut löslichen Verdickungsmittel.

11. Tortenguss nach Anspruch 10, wobei es sich bei dem Verdickungsmittel um Carboxymethylcellulose (CMC) handelt.

12. Tortenguss nach einem der vorhergehenden Ansprüche 1 bis 11, welcher als Tortengusspulver ausgebildet ist und die folgenden Zutaten in Gewichtsprozent beinhaltet:
| | |
|---|---|
| lösliches Salz der Alginsäure | 7 bis 18% |
| schwache Lebensmittelsäure, insbesondere Zitronensäure | 3 bis 8 % |
| Calciumionendonator, insbesondere Di-Calciumphosphat | 0,3 bis 2 % |
| Puffersubstanz, insbesondere Tri-Natriumcitrat | 1 bis 4 % |
| Verdickungsmittel, insbesondere Carboxymethylcellulose | 1 bis 6 % |

13. Verwendung einer Mischung aus einem löslichen Salz der Alginsäure, einem schwer oder nicht in Wasser löslichen Calciumionendonator und einer Lebensmittelsäure zur Herstellung von Tortenguss, insbesondere Tortengusspulver.

14. Verwendung nach Anspruch 13, wobei die Mischung eine Puffersubstanz zur Ausbildung eines Puffersystems mit der Lebensmittelsäure aufweist.

15. Verwendung nach Anspruch 13 oder 14, wobei die Mischung ein in kaltem oder warmen Wasser gut lösliches Verdickungsmittel aufweist.

16. Verfahren zur Zubereitung von Tortenguss **dadurch gekennzeichnet, dass** eine Mischung aus einem löslichen Salz der Alginsäure, einem schwer oder nicht in Wasser löslichen Calciumionendonator und einer Lebensmittelsäure in eine Flüssigkeit, die im Wesentlichen aus kaltem oder warmen Wasser besteht, eingerührt wird.

17. Verfahren nach Anspruch 16, wobei das Einrühren während ca. 0,5 bis 2 Minuten, vorzugsweise während ca. 1 Minute erfolgt.

18. Verfahren nach Anspruch 16 oder 17, wobei die Flüssigkeit einen Anteil von bis zu 80 % Fruchtsaft, vorzugsweise 50 % Fruchtsaft, aufweist.

19. Verfahren nach einem der vorhergehenden Ansprüche 16, 17 oder 18, wobei über ein Puffersystem der pH-Wert auf über 3, vorzugsweise auf über 3,6 eingestellt wird.

20. Verfahren nach Anspruch 19, wobei über das Puffersystem der pH-Wert auf unter 6, vorzugsweise auf unter 4,3 eingestellt wird.
